# EUROPÄISCHE PATENTANMELDUNG

(11) **EP 1 894 844 A2**
(43) Veröffentlichungstag der Anmeldung: **05.03.2008**
(21) Anmeldenummer: 07012113.2
(22) Anmeldetag: 21.06.2007
(51) Int. Cl.: B65B 9/06, B65B 65/00

(54) **Folienverpackungsmaschine mit Blechgehäuse**

(30) Priorität: 01.09.2006 DE 202006013558 U
(71) Anmelder: Beck Packautomaten GmbH & Co., 72636 Frickenhausen (DE)
(72) Erfinder: Beck-Deharde, Beate, 72622 Nürtingen (DE)
(74) Vertreter: Neumann, Ernst Dieter

(57) **Zusammenfassung**

Folienverpackungsmaschine umfassend eine Aufnahme- und Abzugsvorrichtung für Folienrollen, Umlenk- und Führungsmittel für abgezogene Folie, Trenn- und Schweißmittel für verarbeitete Folie, sowie Steuerungs- und Regelungseinheiten, wobei ein selbsttragendes Blechgehäuse (11) vorgesehen ist, in dem zumindest die Aufnahme- und Abzugsvorrichtung, die Antriebsvorrichtungen und die Steuerungs- und Regelungseinheiten aufgenommen sind.

## Beschreibung

Die Erfindung betrifft eine Folienverpackungsmaschine, umfassend eine Aufnahme- und Abzugsvorrichtung für Folienrollen, Umlenk- und Führungsmittel für abgezogene Folie, Trenn- und Schweißmittel für verarbeitete Folie, sowie Steuerungs- und Regelungseinheiten. Bei Maschinen dieser Art sind die Funktionsteile bisher in einem aus Rohren, Winkelstücken und Flacheisen zusammengeschweißten Gestell angeordnet. Hierzu bedarf es vieler Befestigungsmittel wie angeschweißter oder angeschraubter Laschen, eingezogener Querträger und dergleichen. Die Maschinenmontage ist bei Verwendung dieser Gestelle ist sehr aufwendig.

Hiervon ausgehend liegt der vorliegenden Erfindung die Aufgabe zugrunde, eine kostengünstig herzustellende Folienverpackungsmaschine bereitzustellen, mit der die vorgenannten Nachteile vermieden werde. Die Lösung hierfür besteht darin, das ein selbsttragendes Blechgehäuse vorgesehen wird, in dem zumindest die Aufnahme- und Abzugsvorrichtung, die Antriebsvorrichtungen und die Steuerungs- und Regelungseinheiten aufgenommen sind. Dieses Blechgehäuse ist kostengünstig herzustellen, insbesondere wenn die Außenwände nicht sämtlich miteinander verschweißt werden, sondern teilweise durch Abkantvorgänge aus größeren Platten hergestellt werden. Das selbsttragende Blechgehäuse ist dabei bevorzugt als umlaufender Rahmen ausgebildet, der oben und weitgehend offen ist, wobei umlaufende obere und/oder untere Ränder abgekantet sein können.

In bevorzugter Ausführung ist ein verschiebbares Bedienpult außen am Blechgehäuse befestigt, wobei dieses Bedienpult auf einer oder zwei parallel zum Gehäuse verlaufenden Stangen angeordnet ist. Weiterhin ist es günstig, wenn eine Aufwickelspule für einen abgetrennten Folienrandstreifen mit horizontaler Drehachse außen am Blechgehäuse angeordnet ist, da der Folienrandstreifen regelmäßig zu entsorgen ist. Diese Aufwickelspule kann in einem rechtwinkelig eingezogenen Eckbereich des Blechgehäuses angeordnet sein

Zum Auswechseln bzw. Ersetzen der Folienrollen können seitliche Öffnungen als Zugang im Gehäuse vorgesehen werden, ebenso weitere Zugangsöffnungen zu den Antriebsvorrichtungen und/oder zu den Steuerungs- und Regelungseinheiten. Vorzugsweise sind diese seitlichen Öffnungen mit schließbaren Klappen abgedeckt.

Die Umlenk- und Führungsmittel, sowie die Trenn- und Schweißmittel können im Blechgehäuse von oben zugänglich sein. Hierbei ist es günstig, wenn diese Teile von einer aufklappbaren Haube verschlossen sind. Dies dient der Arbeitssicherheit im laufenden Betrieb; zugleich eine Geräuschdämmung für die Arbeitsumgebung sichergestellt. Eine derartige Haube kann aus einer an einem horizontalen Scharnier angeschlagenen Blechkonstruktion bestehen, deren Deckflächen aus transparentem Material, insbesondere aus Plexiglas bestehen können. Am Blechgehäuse kann ein Schaltschrankgehäuse, ebenfalls aus Blech, angesetzt sein, bevorzugt auf einem Sockel in einem rechtwinkelig eingezogenen Eckbereich des Blechgehäuses.

Das Blechgehäuse kann auf einzelnen justierbaren Füßen aufgeständert sein, um nach der Aufstellung Verzüge der Aufnahmepunkte für die eingangsgenannten Funktionsteile innerhalb der Maschine infolge von Verwindungen des Blechgehäuses auszuschließen.

Mit der vorliegenden Erfindung ist eine neuartige Verpackungsmaschine geschaffen, die im Betrieb wesentliche Vorteile aufweist.

Es kann eine Folienverpackungsmaschine mit einem großen Formatbereich der zu verpackenden Waren in äußerst kleiner kompakten Form mit geringer Standfläche dargestellt werden. Durch die Verwendung einer einzelnen Abdeckhaube, die die gesamte Grundfläche des Blechgehäuses abdeckt, und den gesamten Funktionsbereich schützt, sind schnelle und uneingeschränkte Einstellungs- und Wartungsarbeiten an der Maschine möglich. Das Blechgehäuse läßt es zu, an allen erforderlichen Stellen mit schließbaren Klappen versehene Öffnungen vorzusehen, um Wartungs- und Reparaturarbeiten ebenso wie Einstellungsarbeiten leicht durchführen zu können. Die Maschine zeichnet sich durch eine hohe Funktionsdichte aus.

Darstellungen einer bevorzugten Ausführungsform der Erfindung sind in den Zeichnungen zu finden.
- Figur 1: zeigt das erfindungsgemäße Gehäuse in 3-D-Darstellung als Einzelheit;
- Figur 2: zeigt eine erfindungsgemäße Maschine in einer ersten perspektivischen Darstellung;
- Figur 3: zeigt eine erfindungsgemäße Maschine in einer zweiten perspektivischen Darstellung;
- Figur 4: zeigt eine erfindungsgemäße Maschine in Frontansicht;
- Figur 5: zeigt eine erfindungsgemäße Maschine in Seitenansicht;
- Figur 6: zeigt eine erfindungsgemäße Maschine in Draufsicht.

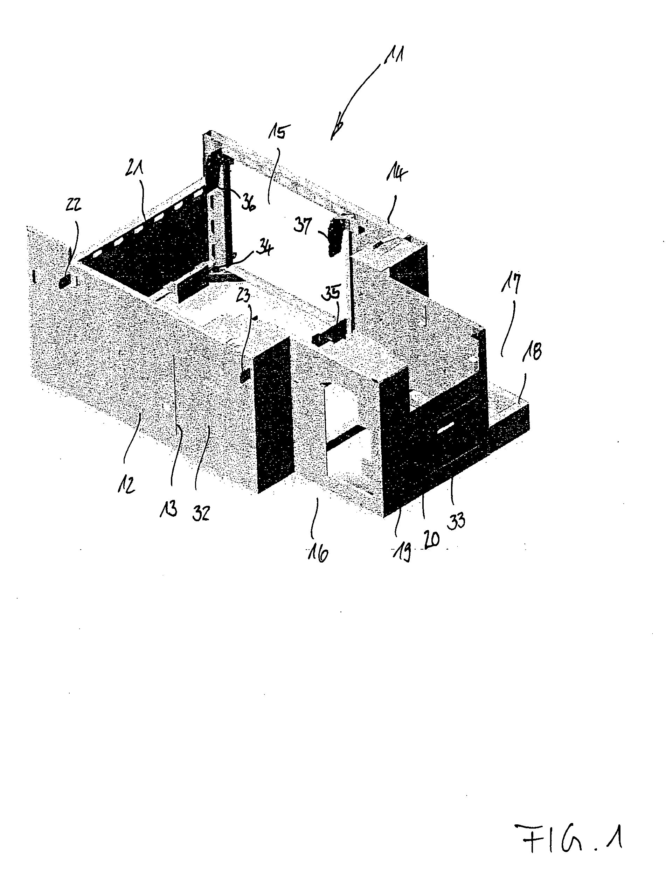

In Figur 1 ist das Blechgehäuse einer erfindungsgemäßen Maschine als Einzelheit in 3-D-Darstellung gezeigt. Es ist ein wesentlichen quaderförmiges Blechgehäuse 11 erkennbar, das an der vorderen Längsseite 12 zwei Laschen 22, 23 zur Fixierung einer Stange aufweist, auf der ein Bedienpult geführt werden kann. In der vorderen Längsseite 12 ist eine Öffnung 13 mit einer Klappe 32 zum Zugang zum Gehäuseinneren vorgesehen. An der hinteren Längsseite 14 ist eine größere seitliche Öffnung 15 sichtbar, über die die Folienrollen in die Maschine eingesetzt werden können. Im Bodenbereich des Blechgehäuses 11 nahe der Öffnung 15 sind zwei Lagerböcke 34, 35 erkennbar, die in dem Gehäuse längs liegende Wellen zur Auflagerung einer Folienrolle aufnehmen können. Oberhalb derselben sind Laschen 36, 37 an der Öffnung 15 innen im Blechgehäuse angeordnet, die eine längs im Gehäuse liegende Welle zur Umlenkung der von der Folienrolle abgezogenen Folienbahn aufnehmen können. Von dort ausgehend wird die horizontal geführte Folienbahn über eine Formschulter in Längsrichtung der Maschine umgelenkt. An der vorderen Stirnseite 19 weist das Blechgehäuse 11 zwei etwa symmetrisch ausgebildete Einziehungen 16, 17 auf, von denen die vorne liegende Einziehung 16 der Aufnahme einer Aufwikkelspule für einen abgetrennten Folienrandstreifen dient, die mit horizontaler Achse am Blechgehäuse 11 angeordnet wird. Die gegenüberliegende Einziehung 17 weist einen unteren Sockel 18 auf, der zum Aufsetzen eines gesonderten Schaltschrankgehäuses dient, das die Energieversorgung der Maschine und die Steuerung und Regelung der Maschine aufnehmen kann; die Steuerungs- und Regelungseinheiten im engeren Sinne sind im Blechgehäuse 11 unterzubringen. An der vorderen Stirnseite 19 ist eine weitere von einer Klappe 33 verschlossene Öffnung 20 als Zugang zum Gehäuseinneren erkennbar. Die hintere Stirnseite 21 ist gegenüber den Längsseiten abgesenkt und kann einen querliegenden Spindelantrieb zur Breiteneinstellung eines Einlauftransportbandes aufnehmen.

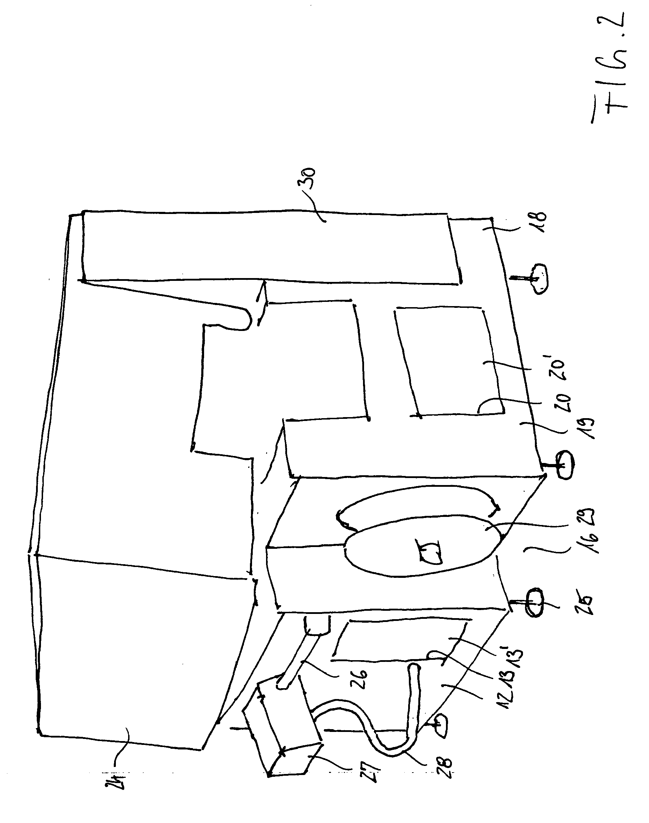

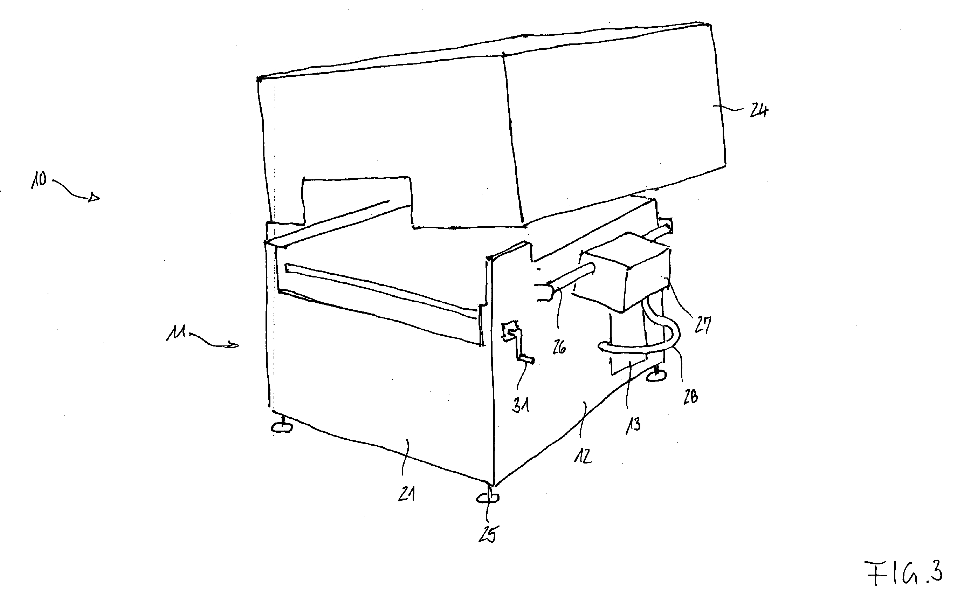

Die Figuren 2 und 3 werden nachfolgend gemeinsam beschrieben. Es ist eine erfindungsgemäße Maschine 10 mit dem Blechgehäuse 11, einer Abdeckhaube 24, sowie einer Mehrzahl von an den Gehäuseecken angeordneten Füßen 25 erkennbar. Am Blechgehäuse 11 sind gleiche Einzelheiten wie in Figur 1 mit jeweils gleichen Bezugsziffern belegt, ohne daß diese hier erneut angesprochen werden. An der vorderen Längswand 12 ist eine parallel zu dieser verlaufenden Stange 26 erkennbar, die zwischen den Laschen 22, 23 gehalten ist und auf der ein Bedienpult 27 längsverschieblich angeordnet ist. Das Bedienpult 27 ist über ein flexiblen Kabelkanal 28 oder eine Energiekette mit dem Inneren des Gehäuses 11 verbunden. In der vorderen Gehäuseeinziehung 16 ist eine mit horizontaler Achse angeordnete Aufwickelspule 29 für den Folienrandstreifen erkennbar.

In die Ausnehmung 17 ist auf den Sockel 18 ein Schaltschrankgehäuse 30 aufgesetzt, in dem die Energieversorgung sowie die Steuerung und Regelung der Maschine untergebracht ist. Die bereits erwähnte Abdeckhaube 24 ist in einer geringfügig angekippten Position gezeigt und kann für Einstellarbeiten vollständig nach oben geklappt werden und kann für den laufenden Betrieb vollständig auf das Gehäuse 11 abgesenkt werden. Die Abdeckhaube 24 ist insbesondere als Rahmenkonstruktion aus Blech herzustellen, an der die Deckfläche und die Seitenflächen mit transparentem Material bedeckt sein können. An der vorderen Längswand 12 ist weiterhin eine Einstellkurbel 31 erkennbar, mit der die Querlage eines Einlauftransportbandes verstellt werden kann.

Die Figuren 4 bis 6 werden nachfolgend gemeinsam beschrieben. Es ist eine erfindungsgemäße Maschine 10 mit einem Blechgehäuse 11, einer Abdeckhaube 24 sowie einer Mehrzahl von an den Gehäuseecken angeordneten Füßen 25 erkennbar. Gleiche Einzelheiten sind mit gleichen Bezugsziffern wie in den Figuren 2 und 3 belegt, ohne daß diese hier sämtlich erneut angesprochen werden. In Figur 5 ist die Abdeckhaube 24 mit strichpunktierten Linien in vollständig geöffneter Stellung gezeigt; im übrigen ist die Abdeckhaube in allen Figuren in vollständig geschlossener Stellung gezeigt. Oberhalb des Bedienpultes 27 ist an der Abdeckhaube 24 eine Griffstange 38 angebracht. Innerhalb des Blechgehäuses 11 ist eine Folienrolle F angedeutet, die mit zur Gehäuselängsrichtung bzw. Transportrichtung paralleler Achse auf zwei Wellen 39, 40 liegt. Es ist weiterhin ein Einlauftransportband 41 in Anlage an der rechtsliegenden Gehäuselängskante in Transportrichtung und ein Auslauftransportband 42 in demgegenüber querversetzter mittiger Lage in Transportrichtung erkennbar. Auf der Rückseite des Blechgehäuses 11 ist eine Klappe 43 zum Verschließen der Öffnung 15 und eine Klappe 44 mit Schwenkbereich in strichpunktierten Linien zum Verschließen des Schaltschrankgehäuses 30 dargestellt. An der Klappe 44 ist ein Handgriff 45 erkennbar. Die Abdeckhaube 24 hat an beiden Stirnseiten Ausbrüche zum Ein- und Austritt der zu verpackenden Waren. Die Aufwickelspule 29 für den Folienrandstreifen ist gegenüberliegend zum Schaltschrankgehäuse 30 sichtbar.

### Bezugszeichenliste

- 10: Maschine
- 11: Blechgehäuse
- 12: vordere Längswand
- 13: Öffnung
- 14: hintere Längswand
- 15: Öffnung
- 16: Einziehung
- 17: Einziehung
- 18: Sockel
- 19: vordere Stirnwand
- 20: Öffnung
- 21: hintere Stirnwand
- 22: Lasche
- 23: Lasche
- 24: Abdeckhaube
- 25: Fuß
- 26: Stange
- 27: Bedienpult
- 28: Kabelkanal
- 29: Aufwickelspule
- 30: Schaltschrankgehäuse
- 31: Einstellkurbel
- 32: Klappe
- 33: Klappe
- 34: Lagerbock
- 35: Lagerbock
- 36: Lasche
- 37: Lasche
- 38: Griffstange
- 39: Welle
- 40: Welle
- 41: Einlauftransportband
- 42: Auslauftransportband

## Patentansprüche

1. Folienverpackungsmaschine umfassend eine Aufnahme- und Abzugsvorrichtung für Folienrollen, Umlenk- und Führungsmittel für abgezogene Folie, Trenn- und Schweißmittel für verarbeitete Folie, Antriebsvorrichtungen sowie Steuerungs- und Regelungseinheiten,
**gekennzeichnet durch**
ein selbsttragendes Blechgehäuse (11), in dem zumindest die Aufnahme- und Abzugsvorrichtung, die Antriebsvorrichtungen und die Steuerungs- und Regelungseinheiten aufgenommen sind.

2. Maschine nach Anspruch 1,
**dadurch gekennzeichnet,**
**daß** ein verschiebbares Bedienpult (27) außen am Blechgehäuse (11) befestigt ist.

3. Maschine nach einem der Ansprüche 1 oder 2,
**dadurch gekennzeichnet,**
**daß** eine Aufwickelspule (29) für einen abgetrennten Folienrandstreifen mit horizontaler Drehachse außen am Blechgehäuse (11) angeordnet ist, insbesondere in einer winkligen Einziehung (14) an einer Ecke des Blechgehäuses.

4. Maschine nach einem der Ansprüche 1 bis 3,
**dadurch gekennzeichnet,**
**daß** seitliche Öffnungen (15, 13, 20) als Zugang zur Aufnahme- und Abzugsvorrichtung, zu den Antriebsvorrichtungen und zu den Steuerungs- und Regelungseinheiten im Blechgehäuse (11) vorgesehen sind.

5. Maschine nach Anspruch 4,
**dadurch gekennzeichnet,**
**daß** die seitlichen Öffnungen (13, 20) mit schließbaren Klappen (13', 20') abgedeckt sind.

6. Maschine nach einem der Ansprüche 1 bis 5,
**dadurch gekennzeichnet,**
**daß** das Blechgehäuse (11) oben offen ist und insebesondere von einer aufklappbaren Haube (24) verschlossen ist.

7. Maschine nach einem der Ansprüche 1 bis 6,
**dadurch gekennzeichnet,**
**daß** die Umlenk- und Führungsmittel sowie die Trenn- und Schweißmittel im Blechgehäuse (11) von oben zugänglich sind.

8. Maschine nach einem der Ansprüche 1 bis 7,
**dadurch gekennzeichnet,**
**daß** Einlauf- und/ oder Auslauftransportbänder für die zu verpackenden Waren im Blechgehäuse angeordnet sind.

9. Maschine nach Anspruch 6,
**dadurch gekennzeichnet,**
**daß** die aufklappbare Haube (24) eine Blechrahmenkonstruktion ist, die mit Deckflächen aus transparentem Material, insbesondere aus Plexiglas beplankt ist.

10. Maschine nach einem der Ansprüche 1 bis 9,
**dadurch gekennzeichnet,**
**daß** ein Schaltschrankgehäuse (30) an das Blechgehäuse (11) angesetzt ist, insbesondere in einer winkligen Einziehung (17) an einer Ecke des Blechgehäuses (11).

11. Maschine nach Anspruch 10,
**dadurch gekennzeichnet,**
**daß** das Schalschrankgehäuse (30) auf einem Sockel (18) des Blechgehäuses (11) aufgesetzt ist.

12. Maschine nach einem der Ansprüche 1 bis 11,
**dadurch gekennzeichnet,**
**daß** das Blechgehäuse (11) auf justierbaren Füßen (25) aufgeständert ist.
